# EUROPEAN PATENT APPLICATION

(11) **EP 4 462 011 A1**
(43) Date of publication of application: **13.11.2024**
(21) Application number: 23743207.5
(22) Date of filing: 16.01.2023
(51) Int. Cl.: F17C 9/00, B65D 90/24, F17C 3/04

(54) **LIQUID HYDROGEN STORAGE TANK**

(30) Priority: 24.01.2022 JP 2022008712
(71) Applicant: KAWASAKI JUKOGYO KABUSHIKI KAISHA, Kobe-shi, Hyogo 650-8670 (JP)
(72) Inventor: EGAMI, Takeshi, Kobe-shi, Hyogo 650-8670 (JP); FUJII, Mahito, Kobe-shi, Hyogo 650-8670 (JP)
(74) Representative: Arnold & Siedsma
(86) International application number: PCT/JP2023/000948
(87) International publication number: WO 2023/140213

(57) **Abstract**

This liquid hydrogen storage tank includes a tank body, a dike, a pump, and a housing chamber. The tank body includes an inner tank that forms a storage space for storing liquid hydrogen therein, and an outer tank that is formed by interposing a thermal insulation layer between the outer tank and the inner tank. The dike includes an outer peripheral surface and an inner peripheral surface that is in contact with the side plate of the outer tank. The dike is formed upwardly so as to surround the outer periphery of the tank body. The pump discharges liquid hydrogen inside the inner tank through the side plate of the inner tank to the outside. The housing chamber is disposed between the outer peripheral surface of the dike and the storage space, and houses the pump.

## Description

### Technical Field

The present disclosure relates to a flat bottom tank that stores liquid hydrogen.

### Background Art

As a storage facility for a low-temperature liquid gas such as liquid hydrogen or liquid natural gas, a flat bottom liquid gas storage tank including a flat bottom tank body that stores the liquid gas and a dike that surrounds an outer periphery of this tank body is known. The dike is constructed for the purpose of preventing the stored liquid gas from flowing out to the periphery of the tank when the tank body is damaged or the like. The flat bottom liquid gas storage tank needs to be attached with a pump for discharging the liquid gas in the tank body. When a liquid gas is discharged through a tank roof, the pump is installed in the inner tank of the tank body (e.g., Patent Literature 1).

However, when the stored liquid gas is liquid hydrogen, there is a case where it is difficult to install the pump in the inner tank of the tank body due to difficulty in maintenance work and the like. It is also possible to provide a space between the dike and the outer tank side plate of the tank body, install a pump in the space, and discharge liquid hydrogen through the side plate. In this case, the space becomes a storage space for the liquid hydrogen leaked from the tank body, and the influence of vaporization of the leaked liquid hydrogen on the surrounding environment becomes a problem.

### Citation List

### Patent Literature

Patent Literature 1: JP 2017-132619 A

### Summary of Invention

An object of the present disclosure is to provide a liquid hydrogen storage tank including a tank body and a dike, the liquid hydrogen storage tank being excellent in maintainability of a pump for discharging liquid hydrogen in the tank body and capable of suppressing an influence on a surrounding environment at the time of liquid leakage.

A liquid hydrogen storage tank according to one aspect of the present disclosure includes: a tank body including an inner tank that forms a storage space for storing liquid hydrogen therein, and an outer tank that is formed by interposing a thermal insulation layer between the outer tank and the inner tank; a dike including an outer peripheral surface and an inner peripheral surface that is in contact with a side plate of the outer tank, the dike being formed upwardly so as to surround an outer periphery of the tank body; a pump that discharges liquid hydrogen inside the inner tank through a side plate of the inner tank to an outside; and a housing chamber that is disposed between the outer peripheral surface of the dike and the storage space, and houses the pump.

According to the liquid hydrogen storage tank of the present disclosure, in the liquid hydrogen storage tank including the dike in contact with the side plate of the outer tank of the tank body, the pump can be installed outside the inner tank without penetrating the side surface of the dike. The maintainability of the pump for discharging liquid hydrogen in the tank body is excellent, and the influence on the surrounding environment at the time of liquid leakage can be suppressed.

### Brief Description of Drawings

FIG. 1 is a cross-sectional view illustrating a liquid hydrogen storage tank according to a first embodiment of the present disclosure.
FIG. 2 is a cross-sectional view taken along line II-II of FIG. 1.
FIG. 3 is a partial cross-sectional view illustrating a scene of replacement work of a pump installed in a housing chamber.
FIG. 4 is a cross-sectional view illustrating a liquid hydrogen storage tank according to a second embodiment.

### Description of Embodiments

Hereinafter, embodiments of a liquid hydrogen storage tank according to the present disclosure will be described in detail with reference to the drawings. The liquid hydrogen storage tank of the present disclosure is a tank that stores liquid hydrogen of a cryogenic temperature, and is a flat bottom tank that includes a ground stationary type multi-shell structure.

### [First Embodiment]

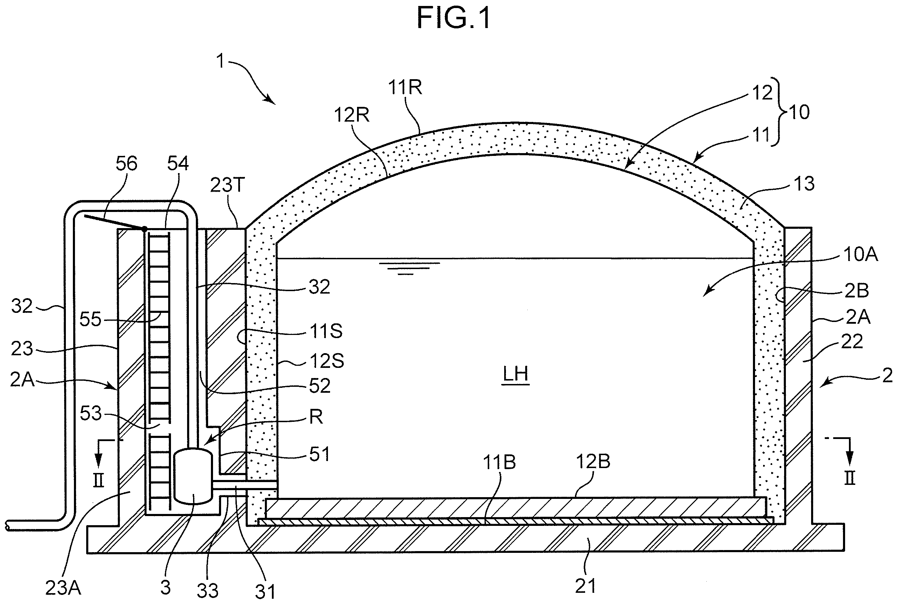

FIG. 1 is a cross-sectional view illustrating a liquid hydrogen storage tank 1 according to the first embodiment of the present disclosure. The liquid hydrogen storage tank 1 is a multi-shell tank that stores liquid hydrogen LH. The liquid hydrogen storage tank 1 includes a tank body 10 including a multi-shell structure, a dike 2 formed upwardly so as to surround the tank body 10, a pump 3 that discharges the liquid hydrogen LH inside the tank body 10 to the outside, and a housing chamber 51 of the pump 3 disposed in a body of the dike 2. FIG. 1 exemplifies a double shell tank as the multi-shell tank.

The tank body 10 is a flat bottom tank including a storage space 10A for storing the liquid hydrogen LH, and including an outer tank 11 provided upright on a tank base 21, an inner tank 12 contained in the outer tank 11, and a thermal insulation layer 13 disposed between the outer tank 11 and the inner tank 12. The tank base 21 is a concrete layer constituting a base portion of the tank body 10 and the dike 2. Each of the outer tank 11 and the inner tank 12 has a circular shape in top view, and is disposed concentrically. The tank body 10 may be a multi-shell tank including an intermediate tank between the outer tank 11 and the inner tank 12.

The outer tank 11 is a sealed body made of metal such as carbon steel or stainless steel, and includes an outer tank bottom plate (outer tank liner) 11B, an outer tank side plate (outer tank liner) 11S, and an outer tank roof 11R. The outer tank bottom plate 11B is laid immediately above the tank base 21, and has a disk shape. An outer tank side plate 11S is provided upright from a peripheral edge of the outer tank bottom plate 11B and has a cylindrical shape. In the present embodiment, the outer tank side plate 11S constitutes the outer periphery of the tank body 10. The outer tank roof 11R is attached to an upper end of the outer tank side plate 11S so as to close an upper surface opening of the outer tank side plate 11S having a cylindrical shape, and has a dome shape.

The inner tank 12 is a tank forming the storage space 10A that actually stores the liquid hydrogen LH. The inner tank 12 is a sealed body made of metal such as stainless steel, and is surrounded by the outer tank 11 via a space at a predetermined interval to be the thermal insulation layer 13. The inner tank 12 includes an inner tank bottom plate 12B, an inner tank side plate 12S, and an inner tank roof 12R. The inner tank bottom plate 12B has a disk shape having a diameter smaller than that of the outer tank bottom plate 11B. The inner tank side plate 12S is provided upright from a peripheral edge of the inner tank bottom plate 12B and has a cylindrical shape. In the present embodiment, the inner tank side plate 12S and the outer tank side plate 11S described above become side plates of the tank body 10. The inner tank roof 12R is attached to an upper end of the inner tank side plate 12S, and has a dome shape. The liquid hydrogen LH is stored inside the inner tank 12, and a gas vaporized from the liquid hydrogen LH is stored in an upper layer portion of the inner tank 12.

The thermal insulation layer 13 is a layer for enhancing the thermal insulation property of the inner tank 12 by using a gap between the outer tank 11 and the inner tank 12 as a heat insulation space. The thermal insulation layer 13 may include a powder heat insulation material or a solid heat insulation material. For example, a gap between the outer tank roof 11R and the inner tank roof 12R is filled with a powder heat insulation material such as granular perlite. A gap between the outer tank side plate 11S and the inner tank side plate 12S is filled with granular perlite, glass wool, or the like. A heat insulation block material such as foam glass is laid in a gap between the outer tank bottom plate 11B and the inner tank bottom plate 12B.

The thermal insulation layer 13 is filled with hydrogen gas, helium gas, nitrogen gas, and the like together with a thermal insulation material such as granular perlite. As the gas to be filled, it is desirable to use a gas having a boiling point equivalent to or close to that of the stored liquid hydrogen LH, and from this viewpoint, hydrogen gas or helium gas is desirable. For example, a configuration in which communication pipe for causing an inner space of the inner tank 12 and the space of the thermal insulation layer 13 to communicate with each other may be installed, and the vaporized gas of the liquid hydrogen LH that is stored is introduced into the thermal insulation layer 13 may be adopted.

The dike 2 is provided upright to deter the stored liquid hydrogen LH from flowing out to the periphery of the tank when the tank body 10 is damaged or the like. The dike 2 is a concrete structure having a cylindrical shape constructed on the tank base 21. The dike 2 of the present embodiment has a structure in which there is no separation distance from the outer periphery of the tank body 10, that is, a structure in which the dike 2 and the outer tank side plate 11S are integrated. When the tank body 10 is damaged or the like, leakage of the liquid hydrogen LH is avoided by the damming of the dike 2, and the liquid hydrogen LH stays in the space of the thermal insulation layer 13. That is, the space present inside relative to an outer peripheral surface 2A of the dike 2 becomes a storage space for the leaked liquid hydrogen LH.

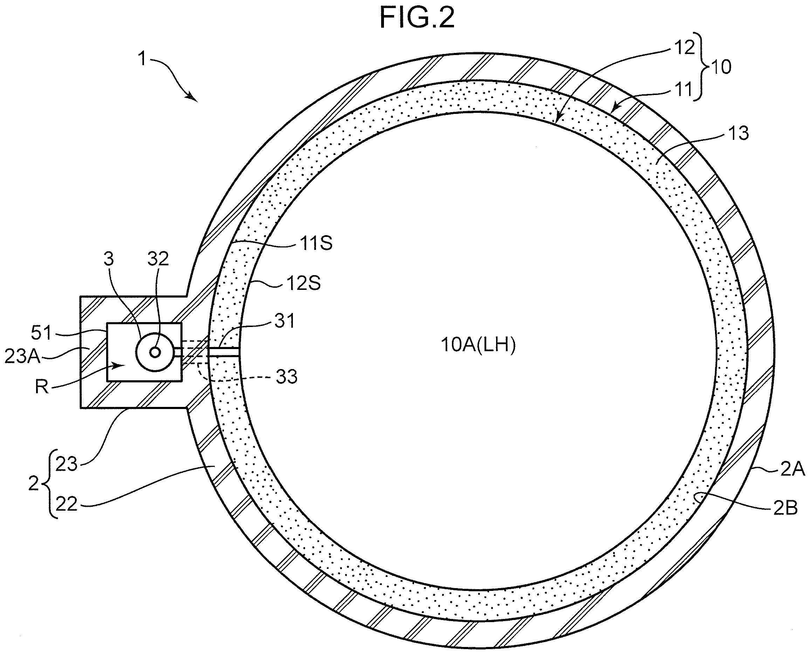

The dike 2 has the outer peripheral surface 2A exposed to the outside and an inner peripheral surface 2B in contact with the outer tank side plate 11S. The dike 2 includes an annular portion 22 and a projection portion 23 as shape characteristics. The annular portion 22 is a cylindrical dike surrounding the entire outer periphery of the tank body 10. FIG. 1 illustrates an example in which the height of the annular portion 22 is substantially the same as the height of the outer tank side plate 11S. The projection portion 23 is a cuboid structure portion provided corresponding to a setting up location of the pump 3 and formed such that a part of the annular portion 22 protrudes radially outward. As illustrated in FIG. 2, the outer peripheral surface 2A of the dike 2 bulges radially outward at a location where the projection portion 23 is formed.

The pump 3 is disposed on the side of the tank body 10 and inside the projection portion 23, and discharges the liquid hydrogen LH to the outside through the side plate of the tank body 10. An extraction pipe 31 and a discharge pipe 32 are coupled to the pump 3. The extraction pipe 31 is a pipeline penetrating the outer tank side plate 11S, the thermal insulation layer 13, and the inner tank side plate 12S from the outside of the tank body 10 and reaching the storage space 10A of the inner tank 12. One end of the extraction pipe 31 faces the liquid hydrogen LH stored in the inner tank 12, and the other end is connected to an inlet end of the pump 3. The discharge pipe 32 is a pipeline extending upward inside the projection portion 23, passing over a top surface 23T of the projection portion 23, and reaching the outside of the liquid hydrogen storage tank 1. One end of the discharge pipe 32 is connected to an outlet end of the pump 3, and the other end is connected to an inlet end of a device using liquid hydrogen LH as fuel or a transport tank truck.

In the present embodiment, the pump 3 for discharging the liquid hydrogen LH in the tank body 10 is disposed outside relative to the inner tank 12. This is because the maintenance work is easier to perform than that when the pump 3 is installed in the storage space 10A in which the liquid hydrogen is stored. In this case, a space for installing the pump 3 is needed on the side of the tank body 10, and in the present embodiment, by forming the pump 3 in the projection portion 23 of the dike 2 and providing the housing chamber 51 therein, an installation place of the pump 3 is secured.

The housing chamber 51 is disposed in the framework of the projection portion 23 and has a space volume capable of housing the pump 3 and parts of the extraction pipe 31 and the discharge pipe 32. The housing chamber 51 may be disposed at an appropriate location between the outer peripheral surface 2A of the dike 2 and the inner tank 12 of the tank body 10. In the first embodiment, the projection portion 23 is provided to form a part where the outer peripheral surface 2A of the dike 2 bulges radially outward, and create a disposing space for the housing chamber 51. An outer wall portion 23A exists between the outer peripheral surface 2A and the housing chamber 51. The installation aspect of the housing chamber 51 is not limited as long as the outer wall portion 23A formed of a part of the dike 2 exists radially outside the housing chamber 51 in this manner. In the second embodiment described later, an example in which the housing chamber 51 is disposed in the thermal insulation layer 13 is given.

On the radially inside of the housing chamber 51, the framework of the projection portion 23 is provided with an extraction opening 33 for guiding the extraction pipe 31 to the housing chamber 51. There is a gap between an inner surface of the extraction opening 33 and an outer peripheral surface of the extraction pipe 31. In a part where the extraction pipe 31 penetrates the outer tank side plate 115, the extraction pipe 31 and the outer tank side plate 11S are joined together.

The projection portion 23 further includes a passage 52 for a worker to access the housing chamber 51. The passage 52 has a rectangular or circular horizontal cross section and extends in a vertical direction in the projection portion 23. A lower end opening 53 is opened on a lower end side of the passage 52, and an upper end opening 54 is opened on an upper end side. The lower end opening 53 is an opening communicating with the housing chamber 51. The upper end opening 54 opens to the top surface 23T of the projection portion 23. In the passage 52, a ladder 55 is installed for the worker to go back and forth. An upstream portion of the discharge pipe 32 is also set up in the passage 52. The upper end opening 54 is provided with an opening/closing door 56 (sealing portion) that opens/closes the upper end opening 54. The opening/closing door 56 is normally in a closed state and is opened at the time of maintenance work or the like. Installation of the opening/closing door 56 can suppress entry of rainwater, dust, and the like into the housing chamber 51 and the passage 52, and can keep them clean.

Since the space of the housing chamber 51 and the passage 52 is a space isolated from the thermal insulation layer 13, it can be an air environment. Therefore, since the worker can easily access the pump 3 in the housing chamber 51 through the passage 52, the maintenance work and the like can be facilitated. In order to enhance the explosion proof property, the space of the housing chamber 51 and the passage 52 may be filled with an inert gas such as a nitrogen gas (GN2).

According to the liquid hydrogen storage tank 1 according to the first embodiment, an inside space of the outer tank 11 and a space in the framework of the protrusion portion 23 become a liquid storage space that can store a liquid leaking from the inner tank 12. Then, an upper surface of the liquid storage space is sealed by the outer tank roof 11R and the opening/closing door 56. Therefore, even if liquid leakage occurs due to damage or the like of the tank body 10, the leaked liquid is confined in the liquid storage space, and outflow of the vaporized liquid hydrogen LH can be suppressed.

The housing chamber 51 of the pump 3 is provided between the outer peripheral surface 2A of the dike 2 and the storage space 10A of the tank body 10, and the pump 3 that discharges the liquid hydrogen LH to the outside through the tank side plate is housed in the housing chamber 51. Therefore, the maintenance work can be easily performed as compared with the case where the pump is installed in the inner tank 12. When the pump 3 is installed inside the inner tank 12 in the liquid hydrogen storage tank 1 that stores the liquid hydrogen LH, it is necessary to extract the pump 3 immersed in the liquid hydrogen LH to the outside, and therefore it is difficult to plan a maintenance method excellent in safety and workability. On the other hand, in the present embodiment, since the pump 3 is disposed in the housing chamber 51 outside the inner tank side plate 12S, the extraction work of the pump 3 from the inner tank 12 itself does not occur, and the maintenance work can be facilitated. The housing chamber 51 is disposed in the framework of the projection portion 23 of the dike 2. Since the housing chamber 51 is formed in the concrete dike 2, the pump 3 can be disposed in a strongly protected environment. Therefore, not only the maintenance work of the pump 3 is good but also resistance to disasters and the like can be enhanced.

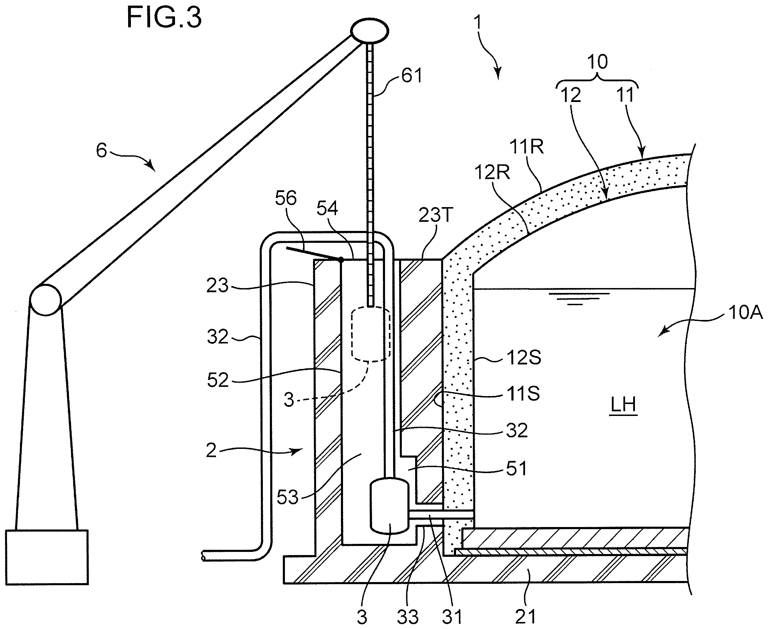

FIG. 3 is a partial cross-sectional view illustrating a scene of replacement work of the pump 3 installed in the housing chamber 51 in the liquid hydrogen storage tank 1 according to the first embodiment. The passage 52 provided in the projection portion 23 is a passage linearly extending in an up-down direction and has a horizontal cross-sectional size allowing the pump 3 to pass therethrough. From the viewpoint of the access route to the housing chamber 51, it is sufficient for the passage 52 to have a size allowing passage of the worker. However, in the present embodiment, the passage 52 is set to a size allowing the pump 3 to pass through without disassembling in consideration of replacement work of the pump 3. When a failure or deterioration occurs in the pump 3, replacement of the pump 3 may become necessary. FIG. 3 illustrates a state where the pump 3 is hung, carried out, and carried in through the passage 52.

For the carrying out and carrying in, a hoisting crane 6 is installed in the vicinity of the periphery of the tank body 10. The crane 6 may be installed on the outer tank roof 11R, or a mobile crane may be used. When the pump 3 is carried out of the housing chamber 51, the opening/closing door 56 is opened, and a suspension wire 61 is lowered from the upper end opening 54. The pump 3 from which the extraction pipe 31 and the discharge pipe 32 are removed is suspended at the lower end of the suspension wire 61. Thereafter, the hoisting crane 6 is operated to hoist the pump 3, and the pump 3 is carried out to the outside of the liquid hydrogen storage tank 1. Carrying of the pump 3 into the housing chamber 51 is an inverse process to the above. Use of the crane 6 in this manner can further facilitate the maintenance work of the pump 3.

### [Second Embodiment]

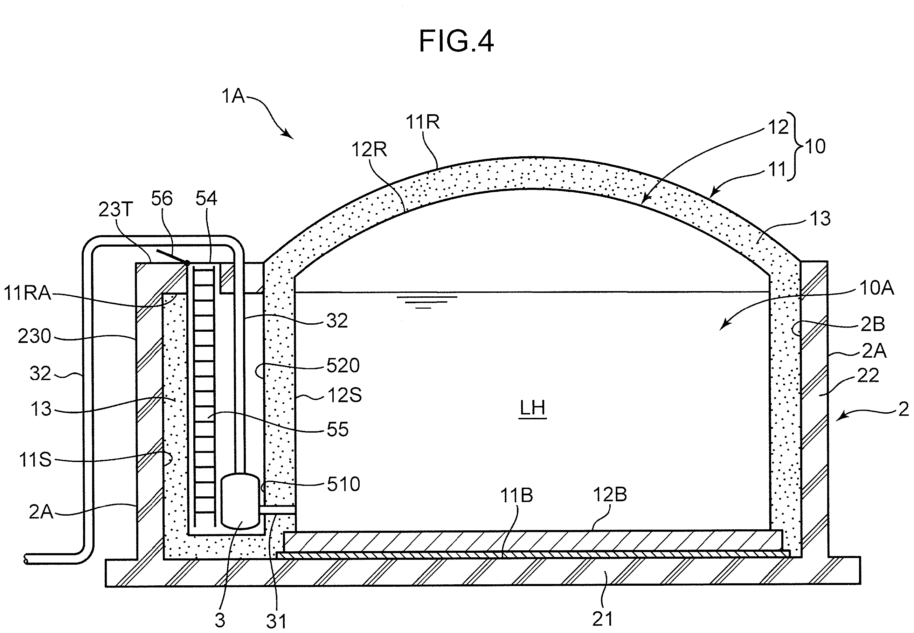

FIG. 4 is a cross-sectional view illustrating a liquid hydrogen storage tank 1A according to the second embodiment. The liquid hydrogen storage tank 1A has a structure in which a housing chamber 510 for housing the pump 3 is disposed not in the dike 2 but in the thermal insulation layer 13 of the tank body 10. The housing chamber 510 is disposed in a space between the outer tank 11 and the inner tank 12, that is, a space to be the thermal insulation layer 13 at a height position close to the height of the inner tank bottom plate 12B. The housing chamber 510 is isolated from the space of the thermal insulation layer 13, and is a space for the worker to enter.

The pump 3 is housed in the housing chamber 510 as described above, and the extraction pipe 31 and the discharge pipe 32 are connected. The extraction pipe 31 penetrates the inner tank side plate 12S and enters the storage space 10A. The point that the dike 2 includes a projection portion 230 is provided at the setting up location of the pump 3 is the same as the first embodiment. However, the second embodiment has a configuration in which a part of the outer tank 11 enters the projection portion 230, and the thermal insulation layer 13 is partially expanded radially outward at the position of the projection portion 230. That is, a part of the outer tank side plate 11S and an extension portion 11RA of the outer tank roof 11R exist in the projection portion 230. Since the housing chamber 510 is installed in the tank body 10, the degree of protrusion radially outward relative to the annular portion 22 (see FIGS. 1 and 2) can be made smaller than that in the first embodiment.

The projection portion 230 is provided with a passage 520 continuous to the housing chamber 510. The passage 520 extends in an up-down direction of the projection portion 230 and continues to the upper side of the housing chamber 510. The space of the housing chamber 510 and the passage 520 is incorporated in the thermal insulation layer 13 in the projection portion 230 as a space isolated from the thermal insulation layer 13. The discharge pipe 32 and the ladder 55 are also set up so as to direct upward in the passage 520.

An upper end portion of the passage 520 penetrates the extension portion 11RA of the outer tank roof 11R and a top wall of the projection portion 230 of the dike 2, and the upper end opening 54 is opened in the top surface 23T. The opening/closing door 56 that opens/closes this upper end opening 54 is included.

According to the liquid hydrogen storage tank 1A according to the second embodiment, an inside space of the outer tank 11 including the space of the housing chamber 510 and the passage 520 becomes a liquid storage space that can store a liquid leaking from the inner tank 12. Then, the upper surface of the liquid storage space is sealed by the outer tank roof 11R and the opening/closing door 56. Therefore, even if liquid leakage occurs due to damage or the like of the tank body 10, the leaked liquid is confined in the liquid storage space, and outflow of the vaporized liquid hydrogen LH can be suppressed. It is not necessary to increase and thicken the radial width of the projection portion 230 of the dike 2 due to formation of the housing chamber 510. Therefore, there is an advantage of capable of increasing the size of the tank body 10 with a limited site area.

### [Other Embodiments]

While the embodiments of the present disclosure have been described above, the present disclosure is not limited to the above embodiments. In the first and second embodiments, an example in which the projection portions 23 and 230 have the same height as the annular portion 22 has been given. In place of this, a projection portion may have a size suppressed to the minimum surrounding the housing chamber 51 of the pump 3. For example, an aspect in which a projection portion has a height of about half of the annular portion 22 and the outer tank side plate 115, and the housing chamber 51 of the pump 3 is provided inside the projection portion may be adopted.

### [Summary of Present Disclosure]

The specific embodiments described above include a disclosure having the following configurations.

A liquid hydrogen storage tank according to one aspect of the present disclosure includes: a tank body including an inner tank that forms a storage space for storing liquid hydrogen therein, and an outer tank that is formed by interposing a thermal insulation layer between the outer tank and the inner tank; a dike including an outer peripheral surface and an inner peripheral surface that is in contact with a side plate of the outer tank, the dike being formed upwardly so as to surround an outer periphery of the tank body; a pump that discharges liquid hydrogen inside the inner tank through a side plate of the inner tank to an outside; and a housing chamber that is disposed between the outer peripheral surface of the dike and the storage space, and houses the pump.

According to this liquid hydrogen storage tank, the tank having the dike integrated with the outer tank can be provided with the pump outside the inner tank and inside relative to the outer peripheral surface of the dike. That is, the pump can be installed without penetrating a side peripheral surface of the dike. Therefore, the maintenance work can be easily performed as compared with the case where the pump is installed inside the inner tank. Since the inner tank is covered with the outer tank and the dike, outflow of liquid hydrogen and diffusion of vaporized hydrogen gas can be prevented.

In the liquid hydrogen storage tank, the dike may be a dike made of concrete, the housing chamber may be set up in a body of the dike, and a passage penetrating a top surface of the dike from the housing chamber may be set up in the body.

According to this liquid hydrogen storage tank, since the housing chamber is formed in the concrete dike, the pump can be disposed in a strongly protected environment. Therefore, not only the maintenance work of the pump is good but also resistance to disasters and the like can be enhanced.

In the liquid hydrogen storage tank, the housing chamber may be disposed in the thermal insulation layer, and a passage penetrating a roof of the outer tank from the housing chamber may be set up in the tank body.

According to this liquid hydrogen storage tank, since the housing chamber is disposed in the thermal insulation layer in the tank body, it is possible to reduce the degree of protrusion in the radial direction of the dike in order to form the housing chamber.

The liquid hydrogen storage tank described above desirably further includes a sealing portion that openably/closably seals an opening of the passage provided on the top surface of the dike or an opening of the passage provided on the roof of the outer tank.

By including the sealing portion, it is possible to deter outflow of liquid hydrogen through the passage at the time of liquid leakage. It is possible to suppress entry of rainwater, dust, and the like and keep the passage and the housing chamber clean.

In the liquid hydrogen storage tank described above, the dike desirably has a projection portion protruding radially outward at a circumferential position where the housing chamber is disposed.

According to this liquid hydrogen storage tank, even when the housing chamber of the pump is provided in the dike, it is only necessary to partially expand the dike radially outward. Therefore, it is possible to suppress the occupied area of the liquid hydrogen storage tank.

## Claims

1. A liquid hydrogen storage tank comprising:
a tank body including an inner tank that forms a storage space for storing liquid hydrogen therein, and an outer tank that is formed by interposing a thermal insulation layer between the outer tank and the inner tank;
a dike including an outer peripheral surface and an inner peripheral surface that is in contact with a side plate of the outer tank, the dike being formed upwardly so as to surround an outer periphery of the tank body;
a pump that discharges liquid hydrogen inside the inner tank through a side plate of the inner tank to an outside; and
a housing chamber that is disposed between the outer peripheral surface of the dike and the storage space, and houses the pump.

2. The liquid hydrogen storage tank according to claim 1, wherein
the dike is a dike made of concrete,
the housing chamber is set up in a body of the dike, and
a passage penetrating a top surface of the dike from the housing chamber is set up in the body.

3. The liquid hydrogen storage tank according to claim 1, wherein
the housing chamber is disposed in the thermal insulation layer, and
a passage penetrating a roof of the outer tank from the housing chamber is set up in the tank body.

4. The liquid hydrogen storage tank according to claim 2 or 3, further comprising a sealing portion that openably/closably seals an opening of the passage provided on the top surface of the dike or an opening of the passage penetrating the roof of the outer tank.

5. The liquid hydrogen storage tank according to any one of claims 1 to 4, wherein
the dike has a projection portion protruding radially outward at a circumferential position where the housing chamber is disposed.
